# EUROPEAN PATENT APPLICATION

(11) **EP 4 582 246 A1**
(43) Date of publication of application: **09.07.2025**
(21) Application number: 24150566.8
(22) Date of filing: 05.01.2024
(51) Int. Cl.: B29D 30/00, B60C 23/04

(54) **APPARATUS AND METHOD FOR MOUNTING AN ADD-ON DEVICE CONTAINING AN ELECTRONIC DEVICE TO AN INNER SURFACE OF A PNEUMATIC TIRE**

(71) Applicant: Bridgestone Europe NV/SA, 1930 Zaventem (BE)
(72) Inventor: CIARNELLA, Alessio, 00128 Roma (IT); PONTONE, Roberto, 00128 Roma (IT)
(74) Representative: Marchetti, Alessio

(57) **Abstract**

An apparatus for mounting an add-on device to an inner surface of a pneumatic tire comprising:
means for grasping a central section of a housing of the add-on device, wherein the central section of the add-on device encloses an electronic device;
means for pressing a sole of the add-on device provided with an adhesive to the inner surface of the pneumatic tire, wherein the sole is provided at a bottom section of the add-on device and protrudes over the central section; and
wherein the means for pressing the sole further comprises:
means for pushing the housing on a periphery of the housing; and
means for pushing the housing on a center of the housing; and

wherein the apparatus is further configured to:
activate the means for pushing the housing on the periphery and the means for pushing the housing on the center consecutively.

## Description

### TECHNICAL FIELD

### FIELD OF INVENTION

This disclosure is generally directed to an apparatus and method for mounting an add-on device containing an electronic device to an inner surface of a pneumatic tire.

### BACKGROUND

During manufacturing a pneumatic tire, an add-on device (e.g. a tire mounted sensor, TMS) is often attached inside the pneumatic tire (generally on the innerliner of the pneumatic tire). An add-on device typically comprises a housing having a central section enclosing an electronic device and a sole provided at a bottom section of the add-on device protruding over the central section of the housing. Further, the sole of the add-on device is typically provided with an adhesive on a lower surface of the sole to mount the add-on device to an inner surface of the pneumatic tire.

WO 2019/161368 A1 illustrates a general tire manufacturing process wherein a continuous and predetermined pressure is typically applied onto an add-on device comprising an adhesive on a target surface that abuts and is affixed to the inner surface of the pneumatic tire.

In the known tire manufacturing processes several problems can arise. For example, there is a risk of having trapped air, or air bubbles in a layer (adhesion layer) comprising an adhesive between the lower surface of the sole of the add-on device and the inner liner of the pneumatic tire. However, trapped air in the adhesion layer can negatively affect the adhesion of the add-on device to the tire innerliner. Besides this, there is a risk that glue comes out from the adhesion layer by pressing the add-on device to the innerliner of the tire resulting in a bad appearance of the final pneumatic tire.

To improve the manufacturing of a pneumatic tire and the properties of the final pneumatic tire, new apparatuses and methods are needed to avoid the above-mentioned risks arising during the known tire manufacturing processes.

### SUMMARY

The above objective is achieved by the present disclosure of apparatuses and methods for mounting an add-on device containing an electronic device to an inner surface (e.g. innerliner) of a pneumatic tire. In particular, the present invention aims at providing apparatuses and methods for pressing individual housing sections (e.g. central section and/or peripheral section) of the add-on device to the tire innerliner allowing to adapt certain mounting conditions to individual manufacturing and product requirements.

According to a first aspect, the invention provides an apparatus for mounting an add-on device to an inner surface of a pneumatic tire. The apparatus comprising means for grasping a central section of a housing of the add-on device, wherein the central section of the add-on device encloses an electronic device, means for pressing a sole of the add-on device provided with an adhesive to the inner surface of the pneumatic tire, wherein the sole is provided at a bottom section of the add-on device and protrudes over the central section. The means for pressing the sole further comprises means for pushing the housing on a periphery of the housing and means for pushing the housing on a center of the housing. The apparatus is further configured to activate the means for pushing the housing on the periphery and the means for pushing the housing on the center consecutively.

In an example, the add-on device may be composed by a housing made of rubber.

In a further example, the housing (or cup-holder) may have a round flat sole at the bottom section (which will be in contact with the tire innerliner).

The electronic device of the add-on device may be a Tire Mounted Sensor (TMS). For example, the central section of the housing may comprise a cylindrical-elliptical section where the TMS is accommodated.

An exemplary adhesive may be a glue.

An apparatus having means for pushing the housing on a periphery of the housing and means for pushing the housing on a center of the housing, wherein the means can be activated consecutively is beneficial. In particular, consecutively or individually activating these means allows adapting certain mounting conditions to individual manufacturing and product requirements. For example, the housing could be pushed at first on the center of the housing and then on the periphery of the housing reducing the risk of trapped air in an adhesive layer between the sole of the add-on device and the tire innerliner. In another example, the periphery of the housing may be pushed before pushing the center of the housing reducing the risk of glue coming out from the adhesive layer during pressing the add-on device on the inner surface of the tire.

According to a second aspect, the apparatus may further comprise at least one of means for applying the adhesive on a lower surface of the sole in a predetermined pattern, or means for moving the add-on device to the inner surface of the pneumatic tire.

In an example the adhesive may be a glue, which is applied with a spiral pattern on the lower surface of the sole. Applying the adhesive on a lower surface of the sole in a predetermined pattern allows an individual adhesive application adjustable to certain mounting conditions or product requirements.

Further, using means for moving the add-on device to the inner surface (e.g. innerliner) of the pneumatic tire allows providing an automated mounting procedure.

According to a further aspect, the means for pushing the housing on the center of the housing may comprise means for pushing an upper surface of the central section of the housing.

For example, the means for pushing the housing on the center of the housing may push with a predetermined force the center of the housing comprising the electronic device (TMS zone).

According to a further aspect, the means for pushing the housing on the periphery of the housing may comprise means for pushing a section of the sole protruding over the central section.

For example, the means for pushing the housing on the periphery of the housing may push with a predetermined force the periphery of the housing (e.g. the sole protruding over the central section).

According to a further aspect, the means for pushing the housing on the periphery of the housing may have a circular shape.

The means for pushing the housing on the periphery may preferably have a shape corresponding to a shape of the sole protruding over the central section.

Using means for pushing the housing on the periphery of the housing having a circular shape allows applying a uniform pressure to the periphery of the housing (e.g. the sole protruding over the central section).

According to a further aspect, at least one of the means for pushing the housing on the periphery of the housing or the means for pushing the housing on the center of the housing may be provided by a deformable component.

The deformable component may be preferably provided by a deformable layer, an air bag, air tube, spring, or foam.

Using deformable components for the means for pushing the housing on the periphery of the housing or the means for pushing the housing on the center of the housing allows a better fitting and allows providing a uniform pressure distribution on the pushed sections of the housing. For example, using deformable components allows providing a uniform pressure distribution on the periphery of the housing in case of a non-planar tire surface (e.g. small bumps). Further, using deformable components reduces the risk of damage of the add-on device during the pressing of the add-on device to the inner surface of the tire.

According to a further aspect, deformable components used for the means for pushing the housing on the periphery of the housing may have a different thickness or a different stiffness compared to deformable components used for the means for pushing the housing on the center of the housing. Using deformable components having a different thickness or a different stiffness between the center and periphery, allows adjusting the sequence of pushing.

According to a further aspect, the means for grasping the central section of the housing may be configured to stop grasping upon a predetermined condition, and the means for pressing may be configured to stop pressing upon the predetermined condition. The predetermined condition may be reached after the add-on device is mounted to the inner surface of the pneumatic tire.

According to a further aspect, the apparatus may further comprise means for installing the apparatus on an automatic system.

According to a further aspect, the means for grasping the central section may be preferably hinged and radially disposed on the means for installing the apparatus on the automatic system.

According to a further aspect, the means for grasping the central section of the housing may comprise a set of fingers.

According to a further aspect, the means for grasping the central section may comprise rollers for self-centering the central section of the housing. Using means for grasping the central section comprising rollers allows self-aligning of the housing in case of a housing misalignment.

According to a further aspect, the apparatus may further comprise means for grasping a section of the sole protruding over the central section to lift the section of the sole protruding over the central section.

According to a further aspect, the means for grasping the section of the sole protruding over the central section may preferably comprise a hook, or a ring.

Lifting the protruding section of the sole during the pressing procedure allows releasing excess air from the adhesive layer between the lower surface of the sole and the inner surface of the pneumatic tire.

According to a further aspect, the means for pushing the housing on the periphery may be configured to start pushing the housing on its periphery after the means for pushing the housing on the center starts centrally pushing the housing, wherein the means for grasping the section of the sole protruding over the central section may be configured to stop grasping after the means for pushing the housing on the periphery starts peripherical pushing.

Centrally pushing the housing before starting peripherical pushing, when the protruding section of the sole is lifted improves releasing excess air from the adhesive layer between the sole and the inner surface of the pneumatic tire. Thereby, the risk of having trapped air in the adhesive layer between the sole of the add-on device and the inner surface of the tire is reduced.

According to a further aspect, the means for pushing the housing on the center may be configured to continue centrally pushing after the means for pushing the housing on the periphery starts peripherical pushing.

According to another aspect, the means for pushing the housing on the center may be configured to start centrally pushing after the means for pushing the housing on the periphery starts peripherical pushing the housing.

Peripherical pushing the housing before centrally pushing the housing avoids or strongly reduces releasing the adhesive (e.g. glue) from the housing contact surface (or adhesive layer) during pressing of the add-on device to the inner surface of the tire.

According to a further aspect, the means for pushing the housing on the periphery may be configured to continue peripherical pushing after the means for pushing the housing on the center starts centrally pushing.

According to a further aspect, the invention provides a method for mounting an add-on device to an inner surface of a pneumatic tire, wherein the add-on device comprises a housing, wherein the housing comprises a central section enclosing an electronic device, and a bottom section comprising a sole protruding over the central section. The method comprising grasping the central section of the housing, pressing the sole provided with an adhesive to the inner surface of the pneumatic tire, wherein pressing the sole further comprises pushing the housing on a periphery of the housing, and pushing the housing on a center of the housing, wherein pushing the housing on the periphery and pushing the housing on the center occurs consecutively.

### BRIEF DESCRIPTION OF THE DRAWINGS

Fig. 1a shows a schematic side view of a housing of an add-on device.
Fig. 1b shows a 3D illustration of a housing of an add-on device.
Fig. 2a shows a schematic side view of an exemplary apparatus for mounting an add-on device to an inner surface of a pneumatic tire according to embodiments of the present disclosure.
Fig. 2b shows a 3D illustration of an exemplary apparatus for mounting an add-on device to an inner surface of a pneumatic tire according to embodiments of the present disclosure.
Fig. 3a to 3i show schematic side views of an exemplary apparatus for mounting an add-on device to an inner surface of a pneumatic tire according to embodiments of the present disclosure.
Fig. 4a to 4g show schematic side views of an exemplary apparatus for mounting an add-on device to an inner surface of a pneumatic tire according to embodiments of the present disclosure.
Fig. 5 shows a flow diagram illustrating a method for mounting an add-on device to an inner surface of a pneumatic tire according to embodiments of the present disclosure.

### DETAILED DESCRIPTION

The present disclosure provides apparatuses and methods for mounting an add-on device to an inner surface of a pneumatic tire mixer. The apparatuses and methods according to this disclosure offer many advantages. The invention allows improving the manufacturing process of a pneumatic tire and the properties of the final pneumatic tire having an add-on device comprising an electronic device. The present disclosure provides different means for pushing housing sections of the add-on device by differentiate pressing force activation between the center and periphery of the housing. The differentiate pressing force activation provides a radially variable pressing force at the housing e.g. for releasing trapped air from an adhesion layer between the sole and the inner surface of a tire, or for avoiding glue coming out the adhesion layer.

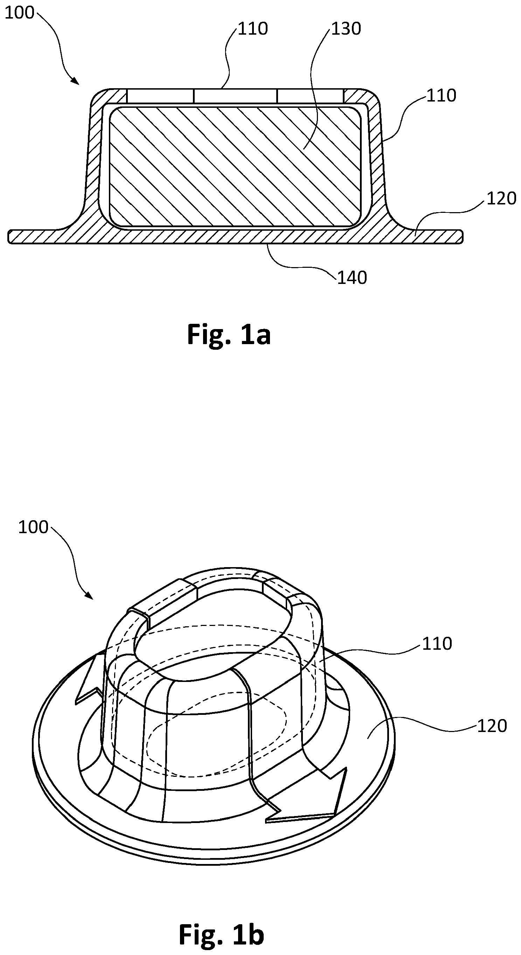

Fig. 1a shows a schematic side view of a housing of an add-on device.

In an embodiment, the housing 100 comprises a central section 110 for enclosing an electronic device 130 and a sole 120 provided at a bottom section of the add-on device protruding over the central section of the housing. The sole of the add-on device is typically provided with an adhesive (not shown) on the lower surface 140 allowing to attach the add-on device to an inner surface of a pneumatic tire.

In addition, Fig. 1b shows a 3D illustration of a housing of an add-on device.

Similar to Fig. 1a, the housing 100 comprises a central section 110 (e.g. for enclosing an electronic device 130) and a sole 120 provided at a bottom section of the add-on device protruding over the central section of the housing.

In an embodiment, the housing 100 (or cup-holder) can be made of rubber.

In an embodiment, the housing 100 may have a round flat sole 120 at the bottom section (which will be in contact with tire innerliner).

In a further embodiment, the central section 110 of the housing may comprise a cylindrical-elliptical section where the electronic device (e.g. Tire Mounted Sensor, TMS) is accommodated.

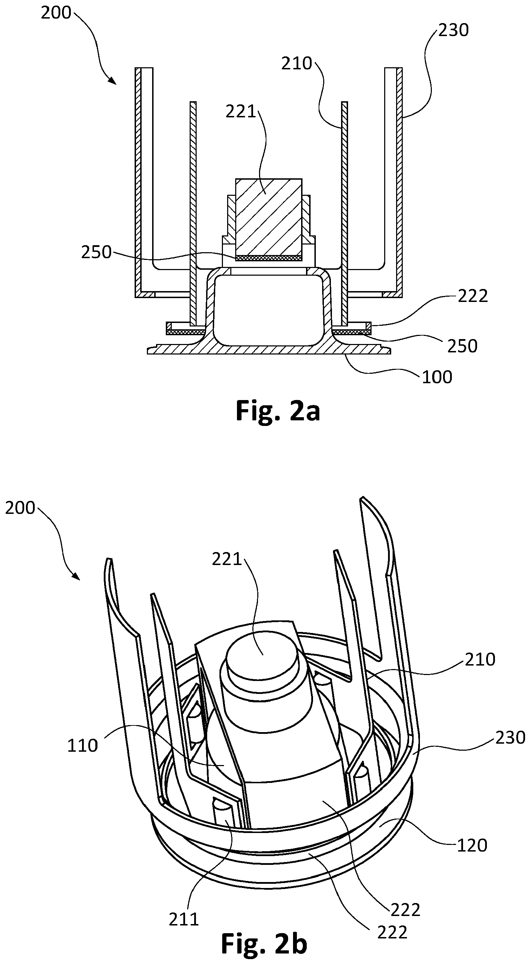

Fig. 2a shows a schematic side view of an exemplary apparatus for mounting an add-on device to an inner surface of a pneumatic tire according to embodiments of the present disclosure.

Fig. 2b shows a 3D illustration of an exemplary apparatus for mounting an add-on device to an inner surface of a pneumatic tire according to embodiments of the present disclosure.

In a first embodiment, the apparatus 200may comprise means 210 for grasping a central section 110 of a housing 100 of the add-on device, wherein the central section 110 of the add-on device encloses an electronic device 130, means 220 for pressing a sole 120 (shown in Fig. 1a and 1b) of the add-on device provided with an adhesive to the inner surface of the pneumatic tire, wherein the sole 120 is provided at a bottom section of the add-on device and protrudes over the central section 110. The means 220 for pressing the sole 120 further comprises means 222 for pushing the housing 100 on a periphery of the housing and means 221 for pushing the housing 100 on a center of the housing 100. The apparatus is further configured to activate the means 222 for pushing the housing on the periphery and the means 221 for pushing the housing on the center consecutively.

In a further embodiment, the adhesive may be a glue.

An apparatus having means 222 for pushing the housing on a periphery of the housing 100 and means 221 for pushing the housing 100 on a center of the housing 100, wherein the means can be activated consecutively is beneficial. In particular, a consecutive or individual activation of these means allows providing a variable radially pressing force for adapting mounting conditions to specific and individual manufacturing or product requirements.

In an embodiment, a consecutive activation of the means for pushing (e.g. by using differentiate pressing force activation) can be achieved by adjusting relative positions of the means for pushing.

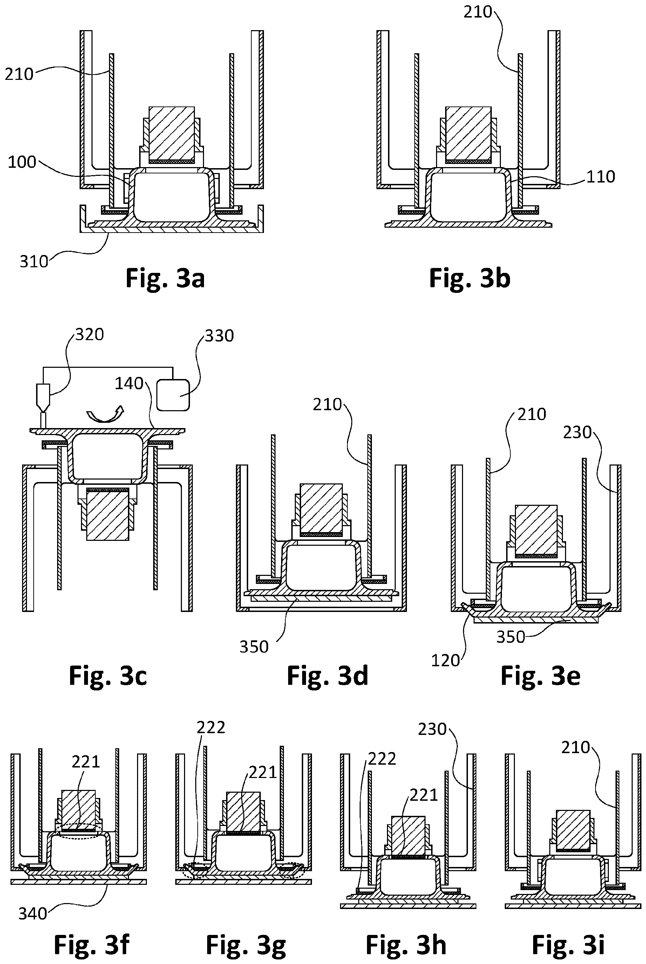

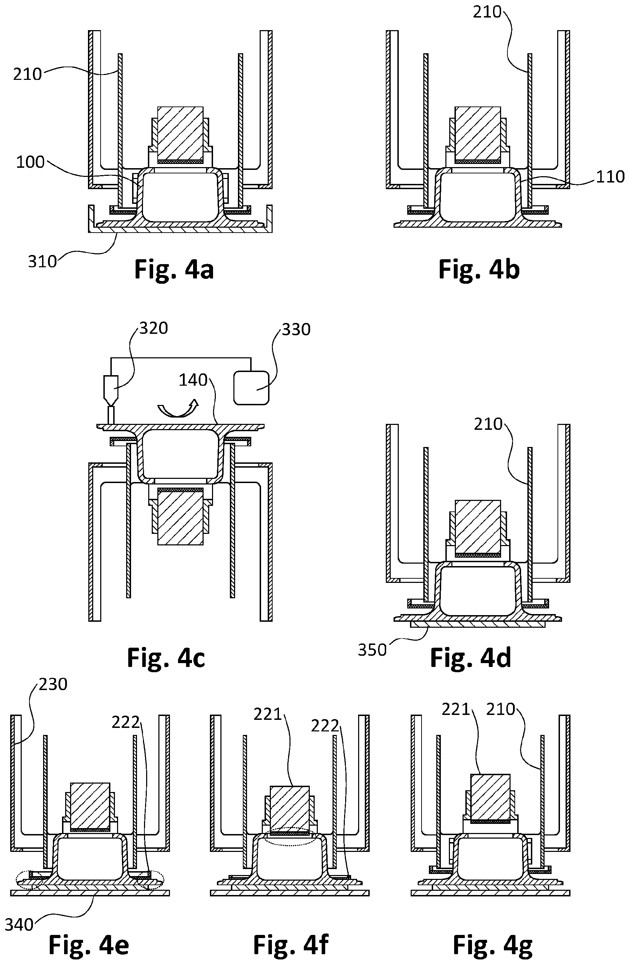

In a further embodiment, the apparatus 200 may further comprise at least one of means 320 for applying the adhesive on a lower surface 140 of the sole 120 in a predetermined pattern (illustrated in Fig. 3c and Fig. 4c) or means for moving the add-on device to the inner surface of the pneumatic tire (not shown).

In an embodiment, the means 221 for pushing the housing 100 on the center of the housing may push with a predetermined force the center of the housing 100 comprising the electronic device 130 (TMS zone).

In an embodiment, the means 221 for pushing the housing 100 on the center of the housing may have a shape corresponding to a shape of the electronic device (TMS).

In a further embodiment, the means 222 for pushing the housing 100 on the periphery of the housing may comprise means for pushing a section of the sole protruding over the central section, as illustrated in Fig. 2a.

For example, the means 222 for pushing the housing on the periphery of the housing may push with a predetermined force the periphery of the housing (e.g. the sole 120 protruding over the central section).

In a further embodiment, the means 222 for pushing the housing on the periphery of the housing may have a circular shape, as illustrated in Fig. 2b.

Using means for pushing the housing on the periphery of the housing having a circular shape allows applying a uniform pressure to the periphery of the housing (e.g. the sole protruding over the central section).

In a further embodiment, the means 222 for pushing the housing on the periphery may preferably have a shape corresponding to a shape of the sole 120 protruding over the central section, as illustrated in Fig. 2b.

In a further embodiment, at least one of the means 222 for pushing the housing on the periphery of the housing or the means 221 for pushing the housing on the center of the housing may be provided by a deformable component 250.

In a further embodiment, the deformable component 250 may be preferably provided by a deformable layer, an air bag, air tube, spring, or foam.

Using deformable components for the means for pushing the housing on the periphery of the housing or the means for pushing the housing on the center of the housing allows a better fitting and allows a uniform pressure distribution on the pushed or pressed sections of the housing. For example, using deformable components allows providing a more uniform pressure distribution on the periphery of the housing in case of a non-planar tire surface (e.g. small bumps). Further using deformable components reduces the risk of damage of the add-on device during the pressing procedure.

According to a further aspect, deformable components used for the means for pushing the housing on the periphery of the housing may have a different thickness or a different stiffness compared to deformable components used for the means for pushing the housing on the center of the housing. Using deformable components having a different thickness or a different stiffness between the center and periphery, allows adjusting the sequence of pushing.In a further embodiment, the means 210 for grasping the central section of the housing may be configured to stop grasping upon a predetermined condition, and the means for pressing may be configured to stop pressing upon the predetermined condition. The predetermined condition may be reached after the add-on device is mounted to the inner surface of the pneumatic tire.

In a further embodiment, the apparatus may further comprise means for installing the apparatus on an automatic system.

In a further embodiment, the means 210 for grasping the central section may be hinged and radially disposed on the means for installing the apparatus 200 on the automatic system.

In a further embodiment, the means for pressing the sole 120 of the add-on device may be provided coaxial to the means for installing the apparatus on an automatic system, wherein the means 222 for pushing the housing 100 on the periphery of the housing and the means 221 for pushing the housing 100 on the center of the housing 100 can be moved in an axial direction.

In a further embodiment, the means 210 for grasping the central section of the housing may comprise a set of fingers.

In an embodiment, the means for grasping the central section (e.g. set of fingers) may comprise rollers 211 for self-centering the central section of the housing, as illustrated in Fig. 2b. Using means for grasping the central section comprising rollers allows self-aligning of the housing in case of a housing misalignment.

According to a further embodiment, the apparatus 200 may further comprise means 230 for grasping a section of the sole 120 protruding over the central section 110 to lift the section of the sole protruding over the central section.

In an embodiment, the means 230 for grasping the section of the sole protruding over the central section may comprise a hook, or a ring (as illustrated in Fig. 2a and 2b).

In an embodiment, the means 230 for grasping the section of the sole protruding over the central section may be hinged on the means for installing the apparatus on the automatic system.

Lifting the protruding section of the sole during the pressing procedure allows releasing excess air from the adhesive layer between the sole and the inner surface of the pneumatic tire.

In a further embodiment, the means for pushing the housing on the periphery may be configured to start pushing the housing on its periphery after the means for pushing the housing on the center starts centrally pushing the housing, wherein the means for grasping the section of the sole protruding over the central section may be configured to stop grasping after the means for pushing the housing on the periphery starts peripherical pushing.

Centrally pushing the housing before starting peripherical pushing, when the protruding section of the sole is lifted allows releasing excess air from the adhesive layer between the sole and the inner surface of the pneumatic tire. Thereby, the risk having trapped air in the adhesive is reduced, wherein reducing an amount of trapped air improves the adhesion properties between the add-on device and the tire.

In a further embodiment, the means for pushing the housing on the center may be configured to continue centrally pushing after the means for pushing the housing on the periphery starts peripherical pushing.

In another embodiment, the means for pushing the housing on the center may be configured to start centrally pushing after the means for pushing the housing on the periphery starts peripherical pushing the housing.

Peripherical pushing the housing before centrally pushing the housing avoids, or strongly reduces releasing the adhesive (e.g. glue) from the housing contact surface (or adhesive layer) during the pressing of the add-on device to the inner surface of the tire.

In a further embodiment, the means for pushing the housing on the periphery may be configured to continue peripherical pushing after the means for pushing the housing on the center starts centrally pushing.

Fig. 3a to 3i show schematic side views of an exemplary apparatus for mounting an add-on device to an inner surface of a pneumatic tire according to embodiments of the present disclosure.

In particular, Fig. 3a to 3i illustrate several processing steps executed by an exemplary apparatus 200 for mounting an add-on device to an inner surface of a pneumatic tire in order to avoid trapped air bubbles in an adhesion layer between the sole 120 of the add-on device and the inner surface of the pneumatic tire.

Fig. 3a shows an initial position of an exemplary apparatus 200 wherein the apparatus 200 is not yet in contact with the housing 100 of the add-on device (cup-holder) and wherein the cup-holder 100 is arranged on a cup-holder housing 310.

In an embodiment, the housing 310 on which the cup-holder is arranged may be a circular cavity slightly larger than the cup-holder sole and which leaves the central section of the cup-holder accessible to the apparatus 200.

Placing the cup-holder in a housing or tray, allows keeping the cup-holder in a predetermined position and orientation, wherein the central section of the cup-holder is accessible to the apparatus 200.

In Fig. 3b, the means 210 for grasping the central section of the housing of the add-on device is activated. Activating the means for grasping the central section of the housing allows moving the add-on device to an adhesive application station, and/or to a tire station.

In an embodiment, the activated means 210 for grasping the central section may provide a guide allowing the add-on device to slide.

In Fig. 3c, the add-on device is transported to an adhesive application station. In Fig. 3c, the adhesive 350 (e.g. glue) is provided by an adhesive tank 330 and applied by means 320 for applying the adhesive (e.g. an adhesive dispenser) in a predetermined pattern to the lower surface of the sole 120 by relative motion (e.g. a spiral pattern).

In an embodiment, an annular part on a border of the sole 120 may remain without adhesive.

In a further embodiment, the add-on device may be transported to the adhesive application station by using the means for installing the apparatus on an automatic system.

As illustrated in Fig. 3d, the means 210 for grasping the central section of the housing of the add-on device is activated allowing to move the add-on device to the inner surface of the pneumatic tire.

As illustrated in Fig. 3e, the apparatus 200 may further comprise means 230 for grasping a section of the sole 120 protruding over the central section 110 to lift the section of the sole protruding over the central section.

In Fig. 3e, the means for grasping a section of the sole 120 protruding over the central section is activated to lift the protruding section of the sole 120.

In an embodiment, the means 230 for grasping the section of the sole protruding over the central section may comprise a hook (not shown), or a ring (as illustrated in Fig 3e).

Lifting the protruding section of the sole during the pressing procedure allows releasing excess air from the adhesive layer between the sole and the inner surface of the pneumatic tire.

In Fig. 3f, the apparatus 200 for mounting an add-on device to an inner surface of a pneumatic tire move the add-on device to the tire station. In particular, the apparatus 200 brings the lower surface of the sole of the add-on device comprising the adhesive in contact with the tire innerliner 340. In addition, the means for pushing the housing on the center starts centrally pushing the housing for a predetermined time with a predetermined force. In particular, the means for pushing the housing on the center of the housing comprises means for pushing an upper surface of the central section of the housing.

In an example, the predetermined time may be below 60 seconds and preferably 20 seconds.

In Fig. 3g the means 222 for pushing the housing on the periphery starts pushing the housing on its periphery after the means 221 for pushing the housing on the center starts centrally pushing the housing for a predetermined time with a predetermined force (in Fig. 3f).

In the embodiment of Fig. 3g, the means 221 for pushing the housing on the center continue centrally pushing after the means 222 for pushing the housing on the periphery starts peripherical pushing.

Centrally pushing the housing before starting peripherical pushing and when the protruding section of the sole is lifted allows releasing trapped air from the adhesive layer between the sole and the inner surface of the pneumatic tire. Thereby, the risk having trapped air bubbles in the adhesive layer is reduced improving the adhesion of the cup-holder or add-on device to the tire innerliner.

In Fig. 3h. the means 230 for grasping the section of the sole protruding over the central section to stop grasping after the means 222 for pushing the housing on the periphery starts peripherical pushing (in Fig. 3g).

In Fig. 3i the means 210 for grasping the central section of the housing stops grasping, the means for pressing stops pressing, and the apparatus 200 moves away from the add-on device after the add-on device is mounted to the inner surface of the pneumatic tire.

Fig. 4a to 4g shows schematic side views of an exemplary apparatus for mounting an add-on device to an inner surface of a pneumatic tire according to embodiments of the present disclosure.

In particular, the Fig. 4a to 4g illustrate several processing steps executed by an exemplary apparatus 200 for mounting an add-on device to an inner surface of a pneumatic tire in order to avoid adhesive (or glue) coming out from the housing contact surface (or adhesive layer) during pressing of the housing to the inner surface of the tire.

In particular, Fig. 4a shows an initial position of an exemplary apparatus 200, wherein the apparatus 200 is not yet in contact with the housing 100 of the add-on device (cup-holder) and wherein the cup-holder 100 is arranged on a cup-holder housing 310.

In an embodiment, the housing 310 on which the cup-holder is arranged may be a circular cavity slightly larger than the cup-holder sole and which leaves the central section of the cup-holder accessible to the apparatus 200.

Placing the cup-holder in a housing or tray, allows keeping the cup-holder in a predetermined position and orientation, wherein the central section of the cup-holder is accessible to the apparatus 200.

In Fig. 4b, the means 210 for grasping the central section of the housing of the add-on device is activated. Activating the means 210 for grasping the central section of the housing allows moving the add-on device to an adhesive application station, and/or to a tire station.

In an embodiment, the activated means 210 for grasping the central section may provide a guide allowing the add-on device to slide.

In Fig. 4c, the add-on device is transported to an adhesive application station. In Fig. 4c, the adhesive 350 (e.g. glue) is provided by an adhesive tank 330 and applied by means 320 for applying the adhesive (e.g. an adhesive dispenser) in a predetermined pattern to the lower surface of the sole 120 by relative motion (e.g. a spiral pattern).

In an embodiment, an annular part on a border of the sole 120 may remain without adhesive.

In a further embodiment, the add-on device may be transported to the adhesive application station by using the means for installing the apparatus on an automatic system.

As illustrated in Fig. 4d, the means 210 for grasping the central section of the housing of the add-on device is activated allowing to move the add-on device to the inner surface of the pneumatic tire.

In Fig. 4e, the apparatus 200 for mounting an add-on device to an inner surface of a pneumatic tire move the add-on device to the tire station. In particular, the apparatus 200 brings the lower surface of the sole of the add-on device comprising the adhesive in contact with the tire innerliner 340. In addition, the means for pushing the housing on the periphery starts pushing the housing on its periphery for a predetermined time with a predetermined force.

In Fig. 4f the means for pushing the housing on the center starts centrally pushing after the means for pushing the housing on the periphery starts peripherical pushing the housing for a predetermined time with a predetermined force (in Fig. 4e).

In the embodiment of Fig. 4f the means for pushing the housing on the periphery continues peripherical pushing after the means for pushing the housing on the center starts centrally pushing.

Peripherical pushing the housing before centrally pushing the housing avoids, or strongly reduces releasing the adhesive (e.g. glue) from the housing contact surface (or adhesive layer) during pressing of the add-on device to the inner surface of the tire.

In Fig. 4g the means 210 for grasping the central section of the housing stop grasping, the means for pressing stops pressing, and the apparatus 200 moves away from the add-on device after the add-on device is mounted to the inner surface of the pneumatic tire.

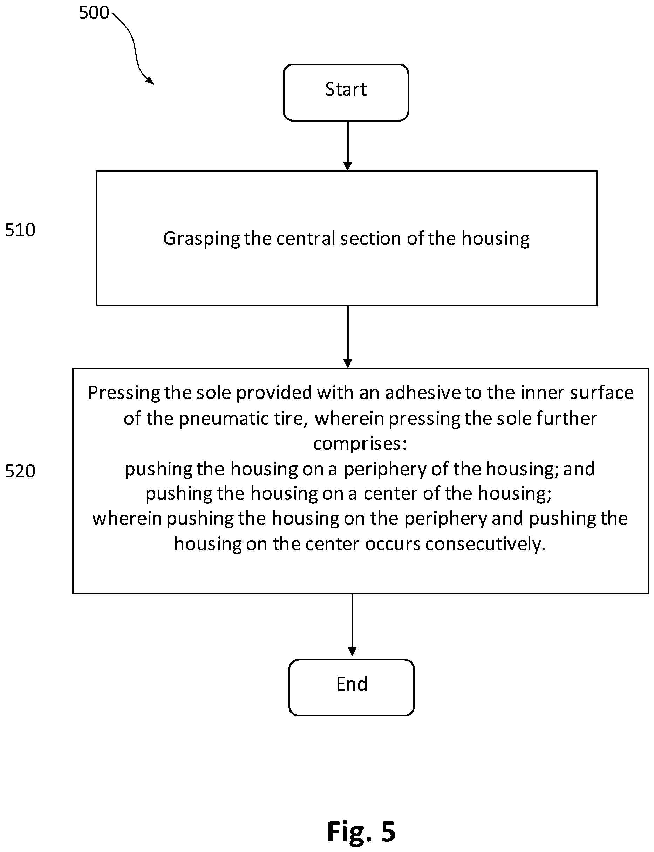

Fig. 5 shows a flow diagram illustrating a method for mounting an add-on device to an inner surface of a pneumatic tire according to embodiments of the present disclosure.

According to an embodiment, the invention provides a method 500 for mounting an add-on device to an inner surface of a pneumatic tire, wherein the add-on device comprises a housing 100, wherein the housing 100 comprises a central section 110 enclosing an electronic device 130, and a bottom section comprising a sole 120 protruding over the central section. The method comprising grasping 510 the central section of the housing, pressing 520 the sole provided with an adhesive to the inner surface of the pneumatic tire, wherein pressing the sole further comprises pushing the housing on a periphery of the housing, and pushing the housing on a center of the housing, wherein pushing the housing on the periphery and pushing the housing on the center occurs consecutively.

In a further embodiment, the adhesive may be a glue.

A method comprising pushing the housing on a periphery of the housing and pushing the housing on a center of the housing, wherein pushing the housing on the periphery and pushing the housing on the center occurs consecutively is beneficial. In particular, consecutive or individual pushing of different sections of the housing provides a variable radially pressing force for adapting mounting conditions to specific and individual manufacturing or product requirements.

### LIST OF REFERENCE SIGNS AS USED IN THE DRAWINGS

- 100: housing
- 110: central section
- 120: sole
- 130: electronic device
- 140: lower surface
- 200: apparatus
- 210: means for grasping a central section of a housing
- 321: rollers
- 221: means for pushing the housing on a center of the housing
- 222: means for pushing the housing on a periphery of the housing
- 230: means for grasping a section of the sole
- 250: deformable component
- 310: cup-holder housing
- 320: means for applying the adhesive
- 330: adhesive tank
- 340: tire innerliner
- 350: adhesive

## Claims

1. An apparatus for mounting an add-on device to an inner surface of a pneumatic tire, the apparatus comprising:
means for grasping a central section of a housing of the add-on device, wherein the central section of the add-on device encloses an electronic device;
means for pressing a sole of the add-on device provided with an adhesive to the inner surface of the pneumatic tire, wherein the sole is provided at a bottom section of the add-on device and protrudes over the central section;
wherein the means for pressing the sole further comprises:
means for pushing the housing on a periphery of the housing; and
means for pushing the housing on a center of the housing;
wherein the apparatus is further configured to:
activate the means for pushing the housing on the periphery and the means for pushing the housing on the center consecutively.

2. The apparatus according to claim 1, wherein the apparatus further comprises at least one of:
means for applying the adhesive on a lower surface of the sole in a predetermined pattern; or
means for moving the add-on device to the inner surface of the pneumatic tire.

3. The apparatus according to any of the claims 1 or 2, wherein the means for pushing the housing on the center of the housing comprises means for pushing an upper surface of the central section of the housing.

4. The apparatus according to any of the preceding claims, wherein the means for pushing the housing on the periphery of the housing comprises means for pushing a section of the sole protruding over the central section.

5. The apparatus according to any of the preceding claims, wherein the means for pushing the housing on the periphery of the housing has a circular shape;
preferably, wherein the means for pushing the housing on the periphery has a shape corresponding to a shape of the sole protruding over the central section.

6. The apparatus according to any of the preceding claims, wherein
at least one of the means for pushing the housing on the periphery of the housing or the means for pushing the housing on the center of the housing are provided by a deformable component;
wherein, preferably, the deformable component is provided by a deformable layer, an air bag, air tube, spring, or foam.

7. The apparatus according to any of the preceding claims, wherein the means for grasping the central section of the housing are configured to stop grasping upon a predetermined condition; and the means for pressing are configured to stop pressing upon the predetermined condition, wherein the predetermined condition is reached after the add-on device is mounted to the inner surface of the pneumatic tire.

8. The apparatus according to any of the preceding claims, wherein the apparatus further comprises means for installing the apparatus on an automatic system, and preferably, the means for grasping the central section are hinged and radially disposed on the means for installing the apparatus on the automatic system.

9. The apparatus according to any of the preceding claims, wherein the means for grasping the central section of the housing comprises a set of fingers.

10. The apparatus according to any of the preceding claims, wherein the apparatus further comprises:
means for grasping a section of the sole protruding over the central section to lift the section of the sole protruding over the central section;
preferably, the means for grasping the section of the sole protruding over the central section comprising a hook, or a ring.

11. The apparatus according to claim 10,
wherein the means for pushing the housing on the periphery is configured to start pushing the housing on its periphery after the means for pushing the housing on the center start centrally pushing the housing;
wherein the means for grasping the section of the sole protruding over the central section is configured to stop grasping after the means for pushing the housing on the periphery start peripherical pushing.

12. The apparatus according to any of the claims 10 or 11, wherein the means for pushing the housing on the center is configured to continue centrally pushing after the means for pushing the housing on the periphery starts peripherical pushing.

13. The apparatus according to any of the previous claims 1 to 9, wherein the means for pushing the housing on the center is configured to start centrally pushing after the means for pushing the housing on the periphery starts peripherical pushing the housing.

14. The apparatus according to any of the previous claims 1 to 9 or 13, wherein the means for pushing the housing on the periphery is configured to continue peripherical pushing after the means for pushing the housing on the center starts centrally pushing.

15. A method for mounting an add-on device to an inner surface of a pneumatic tire,
wherein the add-on device comprises a housing, wherein the housing comprises a central section enclosing an electronic device, and a bottom section comprising a sole protruding over the central section; the method comprising:
grasping the central section of the housing;
pressing the sole provided with an adhesive to the inner surface of the pneumatic tire;
wherein pressing the sole further comprises:
pushing the housing on a periphery of the housing; and
pushing the housing on a center of the housing;
wherein pushing the housing on the periphery and pushing the housing on the center occurs consecutively.
